# EUROPÄISCHE PATENTSCHRIFT

(11) **EP 3 076 839 B1**
(45) Veröffentlichungstag und Bekanntmachung des Hinweises auf die Patenterteilung: **08.08.2018**
(21) Anmeldenummer: 14809612.6
(22) Anmeldetag: 01.12.2014
(51) Int. Cl.: A47J 43/12, A47J 31/44

(54) **MILCHAUFSCHÄUMVORRICHTUNG MIT DYNAMISCHER MISCHEINHEIT UND GETRÄNKEBEREITER ENTHALTEND DIESELBE**
MILK-FROTHING DEVICE WITH DYNAMIC MIXING UNIT, AND BEVERAGE MAKER CONTAINING THE SAME
DISPOSITIF DE MOUSSAGE DE LAIT AVEC UNE UNITÉ DE MÉLANGE DYNAMIQUE ET PRÉPARATEUR DE BOISSON CONTENANT LEDIT DISPOSITIF

(30) Priorität: 03.12.2013 DE 102013224786
(43) Veröffentlichungstag der Anmeldung: 12.10.2016
(73) Patentinhaber: WMF AG, 73312 Geislingen/Steige (DE)
(72) Erfinder: DOLLNER, Sander, 89233 Neu-Ulm (DE); KUCHLER, Thobias, 89077 Ulm (DE); GUSSMANN, Jochen, 73527 Schwäbisch-Gmünd (DE)
(74) Vertreter: Pfenning, Meinig & Partner mbB
(86) Internationale Anmeldenummer: PCT/EP2014/076080
(87) Internationale Veröffentlichungsnummer: WO 2015/082391

(56) Entgegenhaltungen:
- EP-A1- 1 639 924
- WO-A1-90/10411
- FR-A- 1 538 759
- JP-A- 2010 273 744
- US-A1- 2005 079 265

## Beschreibung

Die vorliegende Erfindung bezieht sich auf eine Milchaufschäumvorrichtung mit einer dynamischen Mischeinheit sowie auf einen Getränkebereiter (insbesondere: elektrisch betriebene Kaffeemaschine wie beispielsweise Kaffeevollautomat), der eine solche Milchaufschäumvorrichtung enthält. Die vorliegende Erfindung bezieht sich darüber hinaus auf ein entsprechendes Milchaufschäumverfahren.

Die EP 1 639 924 A1 beschreibt eine Mischvorrichtung zum Belüften und Aufschäumen eines Produkts, das eine Fluidkomponente und mindestens eine weitere Komponente enthält, mit einem Rotor mit einer Drehachse und einer Umdrehungsfläche, die durch den Rotor bei Rotation um seine Drehachse definiert ist. Die Umdrehungsfläche erstreckt sich von einem ersten axialen Ende zu einem zweiten axialen Ende, wobei das erste axiale Ende stromaufwärts des zweiten axialen Endes angeordnet ist. Es ist ein Motor in Antriebsassoziation mit dem Rotor zum Drehen des Rotors um die Drehachse vorgesehen. Eine Produktaustrittsleitung ist stromabwärts des Rotors angeordnet zur Abgabe des belüfteten und aufgeschäumten Produkts.

Die US 2005/0079265 A1 zeigt ein Rotor-Stator-System mit einem Rotor mit einer konischen Oberfläche, der sich in einem Gehäuse samt Wandelement dreht. In der Spalte zwischen Rotor und Statorgehäuse erfolgt eine Scherung.

Die JP 2010 237 744 A zeigt einen Milchaufschäumer mit einem Rotor mit rippenförmigen Vorsprüngen für einen Milchaufschäumer. Am Stator sind komplementäre Vorsprünge angebracht.

Die WO 90/10411 zeigt eine Vorrichtung zum Aufschäumen und/oder Emulgieren bei gleich zeitigem Erhitzen einer Flüssigkeit, z.B. Milch, durch Einleiten von Heißdampf über ein an einen Heißdampferzeuger angeschlossenes Dampfrohr, an dessen freiem Ende mindestens eine Dampfaustrittsdüse angeordnet ist. Der/den Dampfaustrittsdüse(n) ist mindestens ein mittels des aus der/den Dampfaustrittsdüse(n) austretenden Heißdampfes rotierbar angetriebenes Organ zugeordnet.

Auch die FR 1 538 759 A zeigt einen Aufschäumer.

Moderne Kaffeemaschinen, die auch Milch oder Milchschaum oder auch Mischgetränke ausgeben, können auch kalte Milch oder kalten Milchschaum ausgeben. Um Milch bzw. Milchschaum alternativ kalt oder erwärmt auszugeben, werden aufwendige Systeme eingesetzt: Beispielsweise gibt es Vorrichtungen zur Umgehung des Erhitzers (siehe beispielsweise EP 2 120 656 B1) oder komplett getrennte (doppelte) Pfade zum Erzeugen und zum Ausgeben kalter oder warmer Produkte (siehe beispielsweise EP 2 294 952 B1).

Nachteilig ist dabei der hohe systemseitige Aufwand. Dieser resultiert auch daher, dass zum Schäumen warmer Milch aufgrund der deutlich unterschiedlichen Viskosität ein wesentlich höherer Energieeintrag zum Erzeugen der gleichen feinporigen und homogenen Schaumqualität erforderlich ist als bei kalter Milch. Ein großer Nachteil der bekannten Systeme ist insbesondere die geringe Flexibilität, da oft hohe Arbeitsdrücke (durch sehr kleine Blenden in den Rohrleitungen erforderlich sind). Dies führt dazu, dass Komponenten wie Pumpen, Durchlauferhitzer usw. nur in einem sehr schmalen Bereich genutzt werden können und sich gegenseitig beeinflussen. Das Ergebnis ist somit entsprechend in der Variabilität begrenzt.

Ausgehend vom Stand der Technik ist es daher die Aufgabe der vorliegenden Erfindung, eine Milchaufschäumvorrichtung (sowie einen diese enthaltenden Getränkebereiter) zur Verfügung zu stellen, die im Schaumergebnis eine große Flexibilität aufweist. Die Vorrichtung soll dabei zum Erzeugen unterschiedlicher Schaumkonsistenzen und zum Aufschäumen von Flüssigkeiten (Milch) ganz unterschiedlicher Temperatur (also Viskosität) befähigt sein. Weiteres Ziel es ist, die Arbeitsdrücke im System möglichst zu minimieren, wobei das System wenig störanfällig gegen Schwankungen der einzelnen Parameter sein soll (Luftmenge, Luftdruck, Milchmenge, Milchdruck, Temperaturen usw.).

Diese Aufgabe wird durch eine Milchaufschäumvorrichtung gemäß Anspruch 1 sowie durch einen Getränkebereiter gemäß Anspruch 14 gelöst. Ein erfindungsgemäßes Milchaufschäumverfahren ist gemäß der funktionalen Merkmale des Anspruchs 1 ausgebildet. Vorteilhafte Varianten lassen sich jeweils den abhängigen Ansprüchen entnehmen.

Nachfolgend wird die vorliegende Erfindung zunächst allgemein, dann anhand mehrerer Ausführungsbeispiele im Detail beschrieben. Dabei müssen die in den einzelnen Ausführungsbeispielen in Kombination miteinander verwirklichten Merkmale der Erfindung im Rahmen der Erfindung nicht wie in den Ausführungsbeispielen gezeigt verwirklicht werden. Es sind auch andere Kombinationen einzelner der gezeigten Merkmale innerhalb eines Ausführungsbeispiels oder auch Merkmalskombinationen einzelner Merkmale unterschiedlicher Ausführungsbeispiele möglich. Einzelne der gezeigten Merkmale können auch weggelassen werden und insbesondere können bereits einzelne der gezeigten Merkmale für sich eine Verbesserung des Standes der Technik darstellen.

Eine erfindungsgemäße Milchaufschäumvorrichtung ist gemäß Anspruch 1 ausgebildet.

Der Luft kann dabei (erhitzter) Dampf zugesetzt werden, so dass die der dynamischen Mischeinheit zugeleitete Luft in Form eines Luft-Dampf-Gemisches (nachfolgend: L/D-Gemisch) vorliegen kann. Erfindungsgemäß ist ein getrenntes Zuleiten von Milch einerseits und von Luft (falls das Herstellen kalten Milchschaums erwünscht ist) oder einem L/D-Gemisch (falls warmer Milchschaum hergestellt werden soll) andererseits in die dynamische Mischeinheit möglich (die dynamische Mischeinheit kann also mehrere Zuleitungen aufweisen). Ebenso ist es jedoch möglich, lediglich eine einzige Zuleitung zur dynamischen Mischeinheit vorzusehen. In diesem Falle erfolgt ein Zusammenführen der zu mischenden Fluide (Milch und Luft bzw. Milch, Luft und Dampf) stromaufwärts der Zuleitung in die Mischeinheit.

Das Aufschäumen der Milch (durch Luftzufuhr) findet somit in einem Rotor-Stator-System (dynamische Mischeinheit) statt, das in verschiedener Weise ausgeformt sein kann. Wesentlich ist dabei, dass ein erstes Element (Rotor) relativ zu einem weiteren Element (Stator) rotiert, also bewegt wird. Der Mischeinheit werden Milch und Luft zugeleitet, wobei dieses Zuleiten durch einen oder mehrere in die Mischeinheit führende(n) Zuleitkanal/Zuleitkanäle realisiert werden kann. Grundsätzlich kann aber auch auf Zuleitungen verzichtet werden, wenn die Milch und die Luft direkt in die Mischeinheit eingeführt werden.

Erfindungsgemäß verursachen Rotor und Stator eine mehrfache Scherwirkung in der Milch, wodurch eine partielle Denaturierung (Strukturveränderung der Proteine) stattfindet. Hierdurch wird eine verbesserte Schäumbarkeit der Milch erreicht.

Vorteilhafterweise realisierbare Merkmale lassen sich dem abhängigen Anspruch 4 entnehmen.

Alternativ dazu ist es auch möglich, Milch und Luft nahe des Zentrums des Rotors (z.B. über einen sich in Richtung der Rotationsachse gesehen von der Rückseite zur Vorderseite des Rotors durch den Rotorkörper erstreckenden Ringspalt) von der Rückseite des Rotors auf die Vorderseite des Rotors zu führen, die Milch und die Luft auf der Vorderseite des Rotors (durch dessen Rotation) radial nach außen strömen zu lassen (wodurch ebenfalls ein mehrfaches Scheren an den Scherelementen auftritt) und die Milch und die Luft am äußeren Umfang der Vorderseite des Rotors (z.B. durch einen weiteren, von der Vorderseite des Rotors wegführenden Ringspalt mit einem Durchmesser, der in etwa demjenigen des Rotors entspricht) aus der dynamischen Mischeinheit abzuführen.

Weitere Ausgestaltungsformen sind denkbar (so z.B. die Scherstrukturen des Rotors an der angeströmten Rückseite - anstatt auf der Vorderseite - des Rotors auszubilden und dementsprechend die Scherstrukturen des Stators an der dieser Rückwand gegenüberliegenden Innenwandung des Stators auszubilden).

Weitere vorteilhafterweise realisierbare Merkmale lassen sich dem abhängigen Anspruch 5 entnehmen.

Das Zuleiten von Milch und Luft zur Rückseite des Rotors kann dabei zumindest abschnittsweise parallel zur Rotationsachse des Rotors erfolgen (und dabei zentrumsnah oder auch radial beabstandet von der Rotationsachse, also zwischen dem Zentrum des Rotors und dem Außenumfang des Rotors). Alternativ dazu ist jedoch auch ein Einströmen von Luft und Milch radial von außen zum Zentrum hin (also senkrecht zur Rotationsachse des Rotors) oder auch tangential zum Rotorumfang möglich. Gleiches gilt auch für das Ableiten der Milch und der Luft (genauer: der durch das in der dynamischen Mischeinheit erfolgte Aufschäumen resultierenden Milchschaummischung) von der Vorderseite des Rotors (also aus der dynamischen Mischeinheit heraus).

Rotor einerseits und Stator und/oder Gehäuse andererseits können mehrstückig und über einen Bajonettverschluss verbindbar ausgebildet sein (nach Herstellen der Verbindung des Bajonettverschlusses ist die dynamische Mischeinheit bis auf die Zuleitung(en) und Ableitung(en) in der Regel fluiddicht).

Weitere vorteilhafterweise realisierbare Merkmale lassen sich dem abhängigen Anspruch 2 entnehmen.

Die einzelnen Scherelement einer Scherelementreihe können Vorsprünge wie beispielsweise Zähne, Stifte oder ähnliche Körper sein. Die Scherelemente ein und derselben Reihe können (radial nach außen gesehen) in konstantem Abstand von der Rotationsachse der dynamischen Mischeinheit bzw. des Rotors und jeweils beabstandet voneinander, also entlang eines Kreises, auf einer senkrecht zur Rotationsachse ausgerichteten, z.B. kreisscheibenförmigen Oberfläche des Rotors bzw. des Stators positioniert sein. Die Scherelementreihen des Rotors und diejenigen des Stators sind also abwechselnd konzentrisch um die Rotationsachse angeordnet. Rotor und Stator können dabei im Wesentlichen flache, um die Rotationsachse rotationssymmetrische Scheiben sein, die jeweils an den sich zugewandten Oberflächen die Scherelemente als Auskragungen bzw. Vorsprünge tragen.

Vorzugsweise beträgt (in Radialrichtung) die lichte Weite (also der Abstand) zwischen einer Scherelementreihe des Stators und der unmittelbar benachbarten Scherelementreihe des Rotors (und umgekehrt) zwischen 0.1 mm und 0.5 mm.

Der axiale Abstand eines Scherelements des Stators zur Grundfläche des Rotors und/oder der axiale Abstand eines Scherelements des Rotors zur Grundfläche des Stators (also der/die Spalt(e) zwischen den Stirnseiten der Scherelemente und der jeweils gegenüberliegenden Grundfläche, durch den Milch fließen kann, ohne gezwungen zu sein, eine Scherung und/oder eine Richtungsumkehrung zu durchlaufen) kann/können zwischen 0.1 und 3mm, bevorzugt zwischen 0.1 und 0.5mm (inklusive der Grenzwerte) betragen.

Entlang eines Scherelementkreises bzw. einer Scherelementreihe gesehen beträgt die lichte Weite (also der Abstand) zwischen zwei unmittelbar benachbarten Scherelementen einer Reihe bevorzugt zwischen 0.5 mm und 4 mm.

Weitere Dimensionen können wie folgt sein: Höhe der Scherelemente (Ausdehnung dieser Elemente in Rotationsachsrichtung) zwischen 2 und 20 mm, bevorzugt zwischen 5 und 15 mm (bevorzugt: 8 mm); axialer Abstand der Rotorrückseite zum Gehäuse zwischen 0.5 und 10 mm, bevorzugt zwischen 1 und 3 mm (jeweils inklusive der Grenzwerte).

Bevorzugt sind auf dem Rotor und dem Stator jeweils zwischen zwei und zehn Scherelementreihen vorgesehen (vorzugsweise: zwischen zwei und fünf). Die Scherelementreihen des Rotors und des Stators greifen also intermittierende so ineinander, dass zwischen Rotor und Stator von außen nach innen (also zur Rotationsachse hin) strömende Milch und Luft aufgrund der Rotation des Rotors relativ zum Stator jeweils zwischen zwei unmittelbar benachbarten Scherelementreihen (einmal des Rotors und einmal des Stators) einer Scherung unterworfen werden. Durch dieses mehrfache Scheren zwischen den sich mit von außen nach innen gesehen abnehmenden Relativgeschwindigkeiten (wegen des mit konstanter Winkelgeschwindigkeit rotierenden Rotors) begegnenden Scherelementen benachbarter Scherelementreihen kommt es nicht nur zu einer Durchmischung von Milch und Luft (bzw. von Milch und dem L/D-Gemisch), sondern auch zu einer teilweisen Denaturierung der Milch, was zu einer verbesserten Milchschaumqualität und Milchschaumstabilität führt.

Weitere vorteilhafterweise realisierbare Merkmale lassen sich dem abhängigen Anspruch 3 entnehmen.

Die die einzelnen Scherelementreihen des Rotors und des Stators abwechselnd durchströmende und von außen nach innen, also zum Zentrum (Rotationsachse) hin strömende Milch und Luft (bzw. Milch-Luft-Mischung) werden beim Übertritt von den Durchtrittsöffnungen einer Reihe (beispielsweise des Stators) durch den Spalt zwischen zwei benachbarten Reihen in die Durchtrittsöffnungen der unmittelbar benachbarten Reihe (beispielsweise des Rotors) nicht nur jeweils geschert, sondern unterliegen jeweils auch einem Richtungswechsel. Hierdurch lassen sich Schaumqualität und Schaumstabilität weiter verbessern.

Weitere vorteilhafterweise realisierbare Merkmale lassen sich Anspruch 6 entnehmen.

Der zweifache Wert der angegebenen maximalen radialen Ausdehnung ergibt den (mittleren) Durchmesser des Stators und/oder Rotors senkrecht zur Rotationsachse. Der angegebene Bereich der maximalen radialen Ausdehnung berücksichtigt dabei einerseits, dass eine zu geringe radiale Ausdehnung zu einer zu geringen Umfangsgeschwindigkeit (und daher zu einer schlechteren Durchmischung und einer schlechten Schaumqualität (zu grobporiger Schaum)) und/oder zu einer zu hohen Drehzahl, zu hohen Lagerbelastung und/oder zu hohen Geräuschentwicklung (so dass zu hohe Anforderungen an die Mechanik und den Antrieb zu stellen wären) führen würde , und andererseits, dass eine zu große radiale Ausdehnung die dynamische Mischeinheit zu groß und schwer machen würde (da insbesondere die Rotordrehzahlen, vgl. nachfolgend, eine Mindeststabilität der dynamischen Mischeinheit bzw. des Rotors und Stators bedingen). Wichtig ist dabei insbesondere auch, dass zum Aufschäumen durch mehrfaches Scheren die Milch von außen nach innen (zum Zentrum des Rotors hin) über eine bestimmte Mindeststrecke strömen und auf dieser mehrfach geschert werden muss, da die Poren des Milchschaums sich nicht sofort ausbilden, sondern nach ihrer Entstehung in ihrer Form gehalten werden müssen bzw. "langsam" entspannt werden müssen, damit sich die Milch-Grenzflächen um die Luftblase stabilisieren können und der Schaum somit haltbar bzw. stabil wird. Zudem wird durch weiteres Scheren und Durchmischen die Blasengröße verfeinert und die zunächst unterschiedlich großen Blasen werden in ihrer Größe homogenisiert. Gerade dieses mehrfache Scheren während des nach innen Wanderns über mehrere Scherelementreihen führt zu einer optimierten, stabilen Schaumqualität mit einer erwünschten, homogenen Porengröße, deren Mittelwert insbesondere im Bereich zwischen etwa 1/10 mm und 1 mm liegen kann.

Weitere vorteilhafterweise realisierbare Merkmale (die insbesondere in Verbindung mit den in Anspruch 6 angesprochenen Merkmalen realisiert werden können, um eine optimale Schaumqualität und -stabilität zu erzielen) lassen sich dem abhängigen Anspruch 7 entnehmen.

Der Antrieb des Rotors zum Erzielen dieser Drehzahl kann dabei wie in den abhängigen Ansprüchen 8 oder 9 beschrieben realisiert sein.

Der Rotor kann innerhalb des Gehäuses (gemäß der Ansprüche 3 und/oder 9) bzw. eines Gehäuses gekapselt sein. Die Kapselung ist vorteilhafterweise fluiddicht ausgeführt. Der Stator und das Gehäuse können identisch sein, der Stator kann ein Teil des Gehäuses ausbilden oder der Stator kann innerhalb des Gehäuses angeordnet sein. Die Ausbildung gemäß Anspruch 8 hat insbesondere den Vorteil, dass keine Dichtstellen auf der Antriebsseite vorhanden sein müssen.

Weitere vorteilhafterweise realisierbare Merkmale lassen sich den abhängigen Ansprüchen 10 und 11 entnehmen.

Gemäß Anspruch 11 kann ein effizientes Beheizen des Stators erfolgen, da hierzu die (durch die mehreren Reihen mit Scherelementen) vergrößerte Oberfläche genutzt werden kann. Ein Beheizen des Stators kann jedoch auch über außen vorbeigeleiteten Dampf (bzw. ein Heizfluid) realisiert werden.

Eine weitere Alternative zum Beheizen ist ein induktiv erwärmbarer Stator. Auch ein direktes elektrisches Beheizen des Stators (oder der dynamischen Mischeinheit) ist möglich.

Weitere vorteilhafterweise realisierbare Merkmale lassen sich den Ansprüchen 12 und 13 entnehmen.

Dabei lässt sich die Milch und/oder Milchschaumtemperatur über die Temperatur des Dampfes steuern oder regeln. Alternativ oder zusätzlich ist es auch möglich, eine Heizung der dynamischen Mischeinheit, insbesondere deren Stators, und/oder einen Durchlauferhitzer zum Erhitzen der Milch und/oder des Milchschaums vorzusehen. Auch dies kann durch die Steuereinheit gesteuert bzw. durch die Steuer- und Regeleinheit geregelt werden.

Die vorangehend beschriebenen, vorteilhafterweise realisierbaren Merkmale lassen sich in beliebigen Merkmalskombinationen miteinander verwirklichen.

Bei einem erfindungsgemäßen Milchaufschäumverfahren wird zunächst der Rotor einer dynamischen Mischeinheit relativ zum Stator in Rotation versetzt. Rotor und Stator sind so ausgebildet (also insbesondere relativ zueinander positioniert) und werden so relativ zueinander bewegt, dass die der dynamischen Mischeinheit zugeleitete Milch und Luft in der dynamischen Mischeinheit aufgeschäumt werden, indem sie (z.B. vom Außenumfang des Rotors zum Zentrum des Rotors hin) in der dynamischen Mischeinheit strömen und währenddessen durch die Rotation des Rotors relativ zum Stator (und weil sie vorzugsweise durch die mehreren Reihen von Scherelementen hindurchströmen) mehrfach einer Scherung unterworfen werden, bevor sie als Milchschaum schließlich aus der dynamischen Mischeinheit abgeleitet werden.

Ein erfindungsgemäßer Getränkebereiter ist in Anspruch 14 beschrieben.

Der dynamischen Mischeinheit kann somit stromaufwärts Dampf zugeführt werden, um das Gemisch (den Milchschaum) warm auszugeben. Die Dampfzufuhr kann dabei auch direkt in die Mischeinheit erfolgen. Zusätzlich ist auch eine Beimischung von Geschmacksstoffen (z.B. in Sirupform) in die dynamische Mischeinheit möglich oder zum Beispiel die Zumischung von Kaffee oder das Aufschäumen von Trinkschokolade oder ähnlichen Getränken.

Durch Veränderung beispielsweise der Drehzahl des Rotors, der Luftmenge (Volumenstrom), der Milchmenge (Volumenstrom) und/oder von Dampftemperatur und/oder Dampfmenge oder einer beliebigen Kombination daraus kann die Schaumkonsistenz erfindungsgemäß über einen breiten Bereich eingestellt werden (wobei auf Einflussgrößen wie beispielsweise die Viskosität der Milch bedingt durch die Milchtemperatur flexibel reagiert werden kann).

Die Milch kann der dynamischen Mischeinheit beispielsweise durch eine Pumpe zugeführt werden. Die dynamische Mischeinheit kann auch stromaufwärts der Pumpe angeordnet sein, so dass die Pumpe der zusätzlichen Schaumverfeinerung dient. Weiterhin kann die dynamische Mischeinheit auch zur Verfeinerung des Schaums eingesetzt werden, welcher von einem klassischen Venturisystem erzeugt wird, wie es dem Fachmann bekannt ist. Es kann der dynamischen Mischeinheit auch erwärmte Milch von einem Venturisystem zugeführt werden (Erwärmung der Milch durch Dampf ohne Luftzufuhr im Venturisystem), wobei die bereits erwärmte Milch durch die Zufuhr ausschließlich von Luft (also ohne Dampf) in der dynamischen Mischeinheit aufgeschäumt werden kann. Die Milchaufschäumvorrichtung kann auch einen Durchlauferhitzer zum Erwärmen der aufgeschäumten Milch (also stromabwärts der dynamischen Mischeinheit) umfassen. Es ist auch möglich, einen solchen Durchlauferhitzer stromaufwärts der dynamischen Mischeinheit vorzusehen, um die Milch vor ihrem Aufschäumen (bzw. vor der Luftzufuhr) bereits zu erwärmen. Beliebige Kombinationen der vorangehend beschriebenen Merkmale sind möglich.

Gegenüber den aus dem Stand der Technik bekannten Milchaufschäumvorrichtungen hat die erfindungsgemäße Milchaufschäumvorrichtung insbesondere die folgenden Vorteile.

Der eingangsseitige Druck kann (verglichen mit Blendensystemen, die mehr als 2 Bar, teilweise bis 6 Bar benötigen) vergleichsweise gering sein, d.h. < 2 Bar (beispielsweise 600 bis 700 mBar). Somit muss der erfindungsgemäße Milchaufschäumer nicht bei hohem Druck arbeiten, er erlaubt daher einen deutlich breiteren Variationsbereich hinsichtlich Schaumkonsistenz und Schaumqualität.

Da die einzelnen Parameter des Systems (beispielsweise: Drehzahl des Rotors, zugeführte Luftmenge, zugeführte Milchmenge, Mischgrad zwischen Luft und Dampf, ...) sich praktisch gegenseitig nicht beeinflussen, weist die erfindungsgemäße Milchaufschäumvorrichtung eine sehr hohe Flexibilität auf. Gerade auch durch diese Flexibilität ist eine homogene Milchschaumbildung bei unterschiedlichsten Schaumqualitäten möglich.

Die erfindungsgemäße Milchaufschäumvorrichtung hat einen vergleichsweise einfachen Aufbau mit wenigen Komponenten. Im Verschleißfall oder aus hygienischen Gründen können die Komponenten leicht auseinandergenommen und somit getauscht werden (insbesondere wenn Rotor und Stator vermittels eines Bajonettverschlusses verbunden worden sind).

Aufgrund des geringen Systemdrucks können Abdichtungen und Verschlüsse so gestaltet werden, dass Komponenten werkzeuglos (und somit beispielsweise auch von Laien) getauscht werden können. Die erfindungsgemäße Milchaufschäumvorrichtung ist somit besonders wartungsfreundlich.

Der vergleichsweise einfache Aufbau macht auch unterschiedliche Konstruktionen möglich: so ist eine Verbindung mit einem Förderelement als Teil des Rotors möglich, welches den Druck in der Mischeinheit erhöhen kann (beispielsweise in Kombination mit einer abgangsseitigen Blende). Das Förderelement kann die Funktion einer vorgeschalteten Pumpe übernehmen, wobei eine weitere Pumpe zur Milchförderung hinfällig wird. Unterschiedliche Antriebskonzepte sind möglich: So z.B. ein Antrieb des mit magnetischen Elementen (Permanentmagneten) ausgestatteten Rotors über ein Drehfeld (Drehfeldgenerator oder Motor mit Hohlwelle), so dass keine Dichtstellen auf der Antriebsseite notwendig sind. Alternativ dazu ist jedoch auch ein Antrieb des Rotors über eine motorbetriebene Welle möglich.

Insbesondere das bereits beschriebene rückseitige Anströmen des Rotors, das darauf folgende Nach-Außen-Strömen von Milch und Luft (durch die Fliehkräfte des Rotors), das dann folgende Umströmen des Außenumfangs des Rotors hin zur Vorderseite des Rotors und schließlich das Durchströmen der Vorderseite des Rotors (mehrfacher Scherbereich) führt zu einem zwingenden Umströmen aller Bereiche der dynamischen Mischeinheit mit Fluid. Dies hilft insbesondere auch bei der Reinigung, bei der anstelle von Milch und Luft eine Reinigungsflüssigkeit durch die dynamische Mischeinheit geströmt wird. Es ist somit nicht notwendig, die dynamische Mischeinheit zum Reinigen auseinanderzunehmen. Die Reinigung im System wird somit durch die mechanische Rotationsbewegung unterstützt.

Die erfindungsgemäße Vorrichtung erlaubt einen großen Bereich unterschiedlicher Förderleistungen, wobei trotz unterschiedlicher Förderleistung eine gleichbleibende Schaumqualität möglich ist. insbesondere ist durch die Erfindung auch eine einfache Erhitzungsfunktion (über den eingeströmten Dampf) möglich, bei der es zur Kondensation des Dampfes im Umströmbereich des Rotoraußenumfangs kommt.

Nachfolgend wird die Erfindung anhand von Ausführungsbeispielen näher beschrieben. Dabei zeigen:
Figur 1 eine erste erfindungsgemäße Milchaufschäumvorrichtung in einem Querschnitt durch die Rotationsachse.
Figur 2 eine dreidimensionale Aufsicht auf den Rotor (Figur 2a) und den Stator (Figur 2b) gemäß Figur 1.
Figur 3 eine Aufsicht (in Rotationsachsrichtung) auf den Rotor (Figur 3a) und den Stator (Figur 3b) gemäß Figur 1.
Figur 4a einen Schnitt durch die Rotationsachse einer zweiten erfindungsgemäßen Milchaufschäumvorrichtung.
Figur 4b eine dreidimensionale Aufsicht auf die Milchaufschäumvorrichtung aus Figur 4a.
Figur 5 einen erfindungsgemäßen Getränkebereiter in Form eines Kaffeevollautomaten (von dem lediglich die erfindungsgemäß wesentlichen Teile skizziert sind).

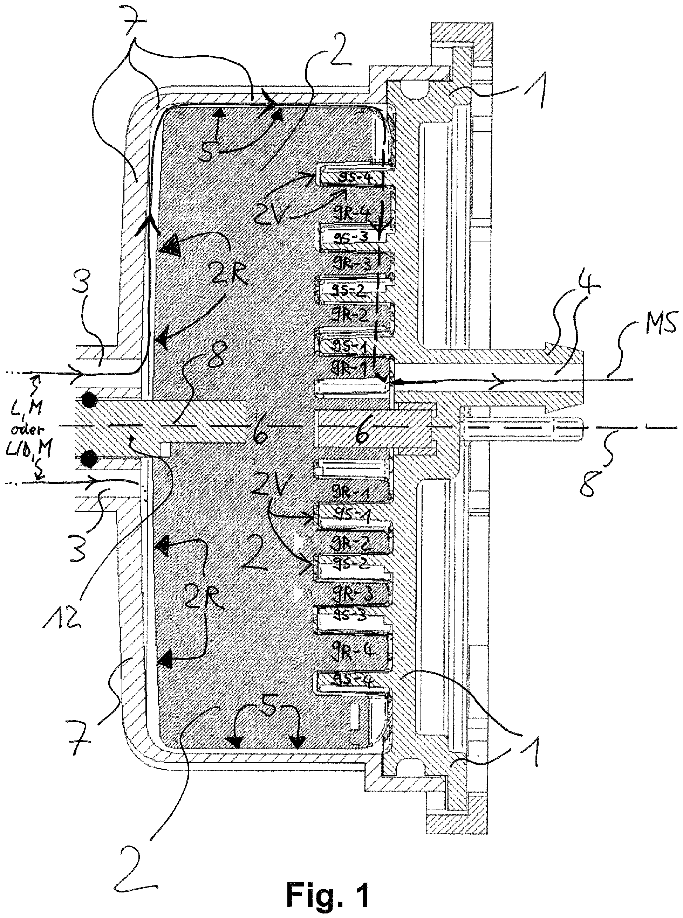

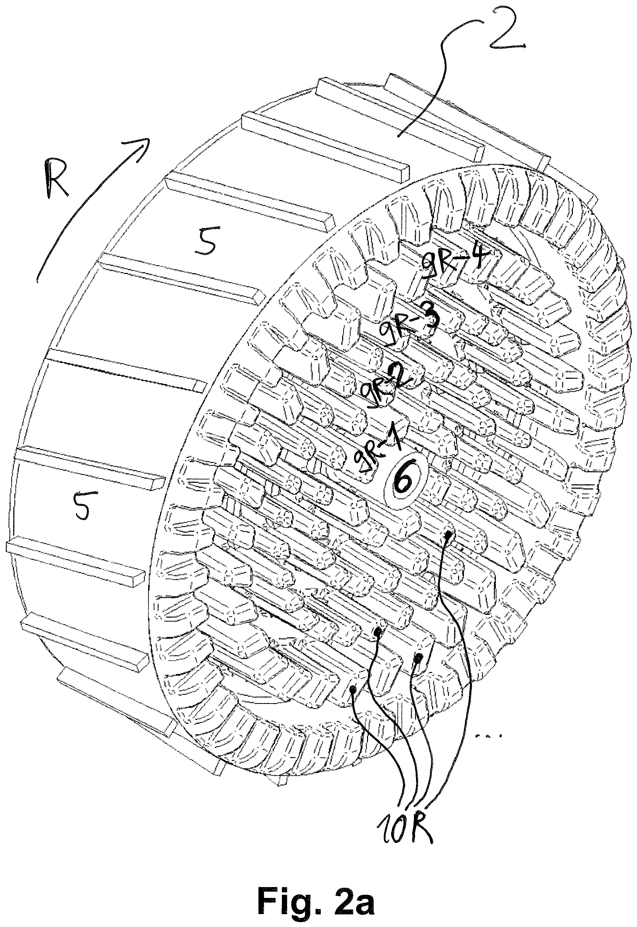

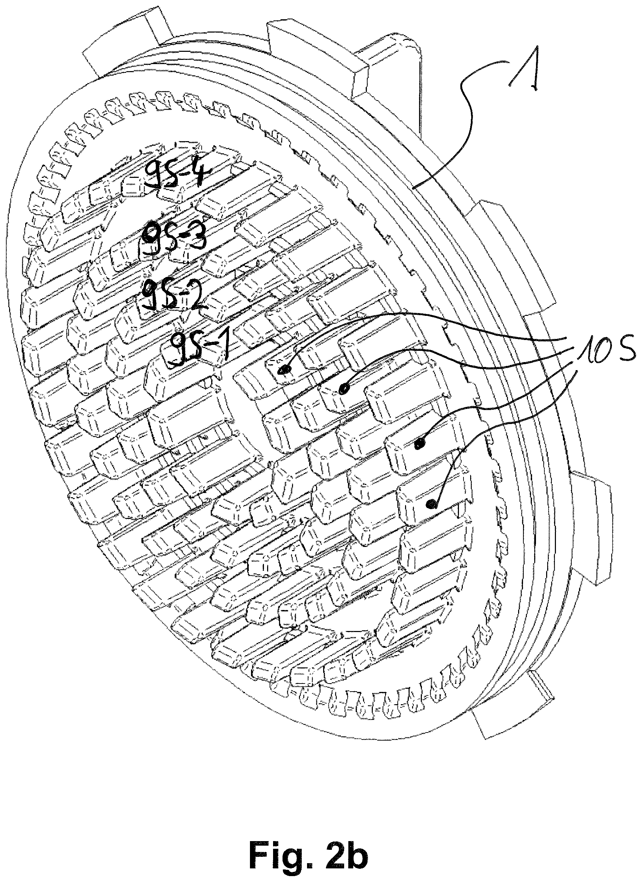

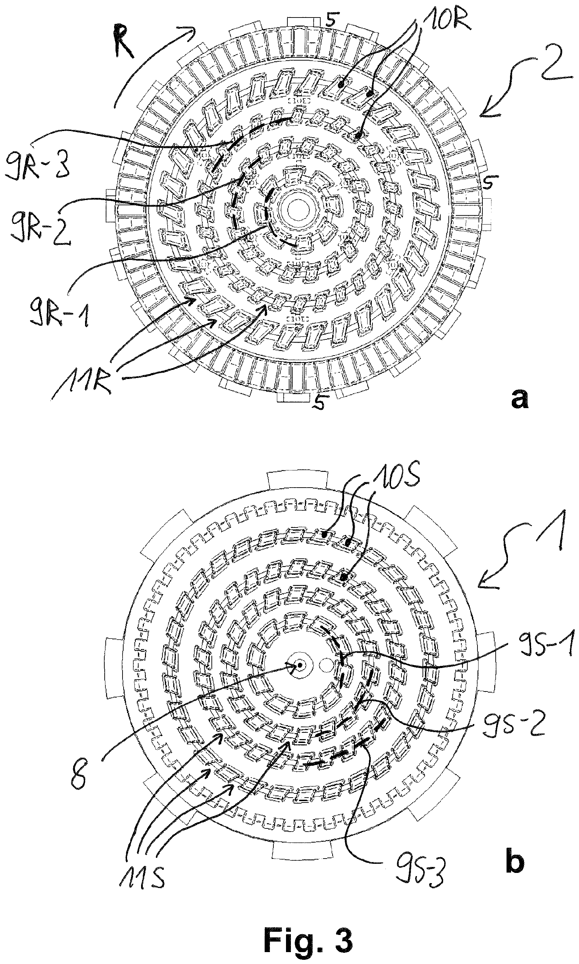

Figur 1 zeigt in einem Querschnitt in einer Ebene, durch die die Rotationsachse 8 der Stator-Rotor-Anordnung verläuft, eine erste erfindungsgemäße Milchaufschäumvorrichtung. Figur 2a zeigt eine dreidimensionale Ansicht und Figur 3a zeigt eine Aufsicht (parallel zur Rotationsachse 8) des Rotors 2 dieser Milchaufschäumvorrichtung. Figur 2b zeigt eine dreidimensionale Ansicht und Figur 3b zeigt eine Aufsicht (parallel zur Rotationsachse 8) des Stators 1 dieser Milchaufschäumvorrichtung.

Wie Figur 1 zeigt, führt parallel zur Rotationsachse 8, jedoch beabstandet davon ein hier zwei Teilkanäle umfassender Zuleitkanal 3 bis unmittelbar an die rückseitige Oberfläche 2R eines Rotors 2. Dieser Zuleitkanal 3 dient zum Zuleiten von Milch M und Luft L oder von Milch M und eines Luft-Dampf-Gemisches zur rückseitigen Oberfläche 2R des Rotors 2. Diese Rückseite 2R ist (bis auf einen Spalt) formschlüssig von einem Gehäuseabschnitt 7 der Milchaufschäumvorrichtung umgeben. Der Gehäuseabschnitt 7 ist fest mit einem Stator 1 verbunden, der an der Vorderseite 2V des Rotors 2 und letzterem gegenüberliegend positioniert ist. Der Stator 1 umschließt den Rotor 2 an dessen Vorderseite 2V, der Gehäuseabschnitt 7 umschließt den Rotor 2 an dessen der Rotationsachse 8 abgewandtem Außenumfang 5. Rotor 2 und Stator 1 bilden die wesentlichen Bauelemente einer dynamischen Mischeinheit. Das Gehäuse 7 sowie der mit diesem verbundene Stator 1 umschließen die Rückseite 2R, den Außenumfang 5 sowie die Vorderseite 2V des Rotors 2 formschlüssig so, dass die einströmende Fluidmischung L, M bzw. L/D, M aufgrund der Fliehkräfte des relativ zum Stator 1 und zum Gehäuse 7 rotierenden Rotors 2 durch einen dünnen Spalt zwischen Gehäuse 7 und Rotorrückseite 2R zunächst zum Außenumfang 5 hin transportiert wird, sodann durch den Druck des über die Zuleitung 3 nachfließenden Fluides L, M bzw. L/D, M über den Außenumfang 5 des Rotors hinweg (durch einen Spalt zwischen dem Außenumfang 5 und dem den Rotor 2 umschließenden Gehäuseabschnittabschnitt 7) zur Vorderseite 2V des Rotors 2 gedrückt wird und schließlich wegen besagten Drucks zwischen der Vorderseite 2V des Rotors 2 und der der Vorderseite 2V des Rotors 2 gegenüberliegenden Oberfläche des Stators 1 (also zwischen den Scherelementen 10R des Rotors 2 einerseits und den Scherelementen 10S des Stators 1 andererseits, siehe nachfolgend) vom Außenumfang 5 des Rotors 2 hin zur Rotationsachse 8 strömt, wo besagte Fluidmischung über einen parallel zur Rotationsachse 8 verlaufenden Ableitkanal 4 aus der dynamischen Mischeinheit abgeleitet wird. Dabei erfolgt beim Durchströmen der Scherelemente 10R, 10S ein Aufschäumen der einströmenden Fluidmischung L, M bzw. L/D, M zu Milchschaum MS.

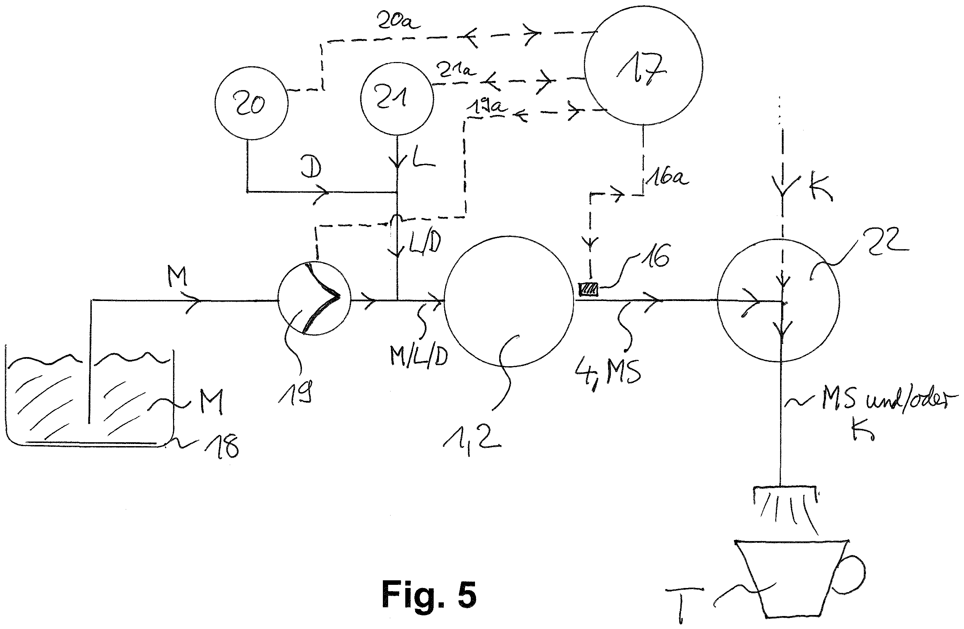

Der Weg der Fluidmischung über den Zuleitkanal 3, an der Rückseite 2R des Rotors 2 entlang von der Nähe des Zentrums 6 des Rotors hin zum Außenumfang 5 des Rotors 2, über den Außenumfang 5 hinweg, an der Vorderseite 2V des Rotors 2 zwischen den Scherelementen 10R, 10S hindurch und wieder hin zum Zentrum 6 des Rotors sowie schließlich über den Ableitkanal 4 ist in Figur 1 durch Pfeile gekennzeichnet (eingezeichnet nur für die an der obenliegenden Außenumfangsseite 5 vorbeiströmende Fluidmenge). Der an der Vorderseite 2V des Rotors 2 gegen die Rotation des Rotors 2 aufzubringende Kraft, um die Fluidmischung durch die Scherelemente 10R, 10S zum Aufschäumen hindurchzupressen, wird durch den vermittels der Pumpe 19 und der Druckluftquelle 21 stromaufwärts des Zuleitungsabschnitts 3 (vgl. Figur 5) erzeugten Druck erzeugt. Dabei ist ein Druck in der dynamischen Mischeinheit von ca. 600 bis 700 mBar ausreichend.

Der Außendurchmesser des den Rotor 2 außenumfangsseitig umschließenden Statorabschnitts beträgt hier 7 cm. Gehäuse 7 und Stator 1 umschließen den Rotor (bis auf die Zuleitung 3 und die Ableitung 4) fluiddicht.

Der Antrieb des Rotors 2 bei der ersten erfindungsgemäßen Milchaufschäumvorrichtung gemäß Figuren 1 bis 3 erfolgt über eine motorbetriebene, um die Rotationsachse 8 rotierende Antriebswelle 12.

Figuren 2a und 3a zeigen den Aufbau des Rotors 2 der ersten erfindungsgemäßen Milchaufschäumvorrichtung bzw. deren dynamischer Mischeinheit. Der Rotor 2 ist als im Wesentlichen flache, rotationssymmetrische Scheibe ausgebildet, die einen Durchmesser von 6.5 cm aufweist. An ihrer zum Stator 1 hin auszurichtenden Vorderseite 2V weist diese Scheibe mehrere (hier: 3) Scherelementreihen 9R auf (hier: Reihen 9R-1, 9R-2 und 9R-3). Die Rotationsrichtung des Rotors 2 bei Rotation um sein Zentrum 6 bzw. um die Rotationsachse 8 der dynamischen Mischeinheit ist mit R (siehe Pfeil) gekennzeichnet.

Jede Scherelementreihe 9R besteht aus einer Vielzahl einzelner Scherelemente 10R, die in Form blockförmiger Stifte von der Oberfläche 2V des Rotors 2 (und somit zum Stator 1 hin gerichtet) vorstehen, also als Vorsprünge ausgebildet sind. Zwischen unmittelbar benachbarten Scherelementen 10R einer Reihe sind jeweils spaltförmige Durchtrittsöffnungen 11R ausgebildet. Die einzelnen Scherelemente 10R jeder Reihe 9R sind auf einem Kreis um das Zentrum 6 positioniert. Die drei Scherelementreihen 9R bilden daher jeweils konzentrisch um das Zentrum 6 positionierte bzw. um die Rotationsachse 8 (im rotierenden Zustand R) umlaufende Kreisringe von Vorsprüngen aus. Die einzelnen Scherelementreihen bzw. Kreisringe 9R sind dabei vom Zentrum 6 zum Außenumfang 5 des Rotors 2 gesehen radial so beabstandet voneinander positioniert, dass jeweils zwischen zwei benachbarten Scherelementreihen 9R des Rotors 2 eine Scherelementreihe 9S des Stators 1 formschlüssig (bis auf einen verbleibenden, dünnen Spalt mit einer Spaltausdehnung von etwa 0.3 mm) eingreifen kann.

Beim Stator 1 sind die Scherelementreihen 9S (konzentrisch um die Rotationsachse) sowie die Scherelemente 10S (zum Rotor 2 hin gerichtete Vorsprünge) und Durchtrittsöffnungen 11S dieser Reihen analog wie beim Rotor 2 ausgebildet.

Im zur fertigen dynamischen Mischeinheit zusammengesetzten Zustand (vgl. Figur 1) sind somit entlang der Rotationsachse 8 gesehen überlappende, vom Zentrum 6 zum Außenumfang 5 gesehen abwechselnd positionierte, ineinandergreifende Reihen von Scherelementen 10R des Rotors 2 einerseits und von Scherelementen 10S des Stators 1 andererseits ausgebildet. Rotiert der Rotor 2 relativ zum Stator 1, wird das vom Außenumfang 5 an der Vorderseite 2V des Rotors 2 zum Zentrum 6 hindurchgepresste Fluid L, M bzw. L/D, M somit jedes Mal, wenn es durch Durchtrittsöffnungen 11 einer Reihe (beispielsweise: der Durchtrittsöffnungen 11R einer Scherelementreihe 9R des Rotors 2) hindurchtritt und über den dünnen Spalt zur unmittelbar benachbarten Scherelementreihe (beispielsweise zur benachbarten Scherelementreihe 10S des Stators 1) fließt, geschert. Wie der Vergleich des in den Figuren 2b und 3b gezeigten Stators mit dem in den Figuren 2a und 3a gezeigten Rotor zeigt, erfolgt somit beim Fluss vom Außenumfang 5 zum Zentrum 6 eine erste Scherung beim Übertritt aus den Durchtrittsöffnungen 11S der äußeren Scherelementreihe 9S-4 des Stators 1 über den Spalt zwischen dieser und der äußeren Scherelementreihe 9R-4 des Rotors in die Durchtrittsöffnungen 11R der äußeren Scherelementreihe 9R-4 des Rotors 2, anschließend eine zweite Scherung beim Übertritt von der äußeren Scherelementreihe 9R-4 des Rotors 2 über den Spalt zwischen dieser und der zweitäußeren Scherelementreihe 9S-3 des Stators 1, danach eine dritte Scherung beim Übertritt von der zweitäußeren Scherelementreihe 9S-3 des Stators 1 in die benachbarte zweitäußere Scherelementreihe 9R-3 des Rotors 2 usw.

Wie Figuren 2 und 3 zeigen, nimmt die Anzahl der Scherelemente 10R, 10S je Scherelementreihe bei den einzelnen Scherelementreihen 9R, 9S vom Zentrum 6 zum Außenumfang 5 sowohl beim Rotor 2 als auch beim Stator 1 zu. Die einzelnen Reihen bzw. Kreisringe von Scherelementen 9R, 9S haben Scherelemente 10R, 10S leicht unterschiedlicher Form (vgl. insbesondere die Aufsicht der Figuren 3a und 3b), dies optimiert einerseits die Verweilzeit im dynamischen Mischer, andererseits erhöht es die Scherwirkung und stellt somit einerseits die Homogenisierung und Stabilisierung des Schaums und andererseits die Stabilität des Schaums sicher.

Entlang des Kreisumfangs der Scherelementreihe gesehen, weisen die Durchtrittsöffnungen 11R, 11S der einzelnen Scherelementreihen 9R, 9S eine Spaltbreite von etwa 2 mm auf. Wie man an den Figuren 3a und 3b erkennen kann (diese zeigen die Vorderseite 2V des Rotors 2 in Aufsicht, vgl. Figur 3a, und die dieser Vorderseite 2V nach Zusammensetzen des Rotor-Stator-Systems zugewandte Seite des Stators, vgl. Figur 3b), sind die zwischen den einzelnen Scherelementen 10R einer Scherelementreihe 9R des Rotors 2 ausgebildeten Fluiddurchtrittsöffnungen 11R den zwischen den einzelnen Scherelementen der jeweils benachbarten Scherelementreihe 9S des Stators 1 ausgebildeten Fluiddurchtrittsöffnungen 11S gegenläufig gerichtet (dies ist an den in den Figuren 3a und 3b beim Rotor 2 und beim Stator 1 gleichgerichteten Verkippungen der Längsachsen der Durchtrittsöffnungen 11R, 11S relativ zur Radialrichtung vom Zentrum 6 zum Außenumfang 5 hin erkennbar).

Der hier nur angedeutete Antrieb des Rotors 2 über die motorbetriebene Welle 12 erlaubt Rotordrehzahlen zwischen 500 1/min und 7000 1/min. Durch Variation der Rotordrehzahl in diesem breiten Drehzahlbereich lassen sich Schaumqualität und Schaumkonsistenz kontinuierlich und sehr variabel einstellen.

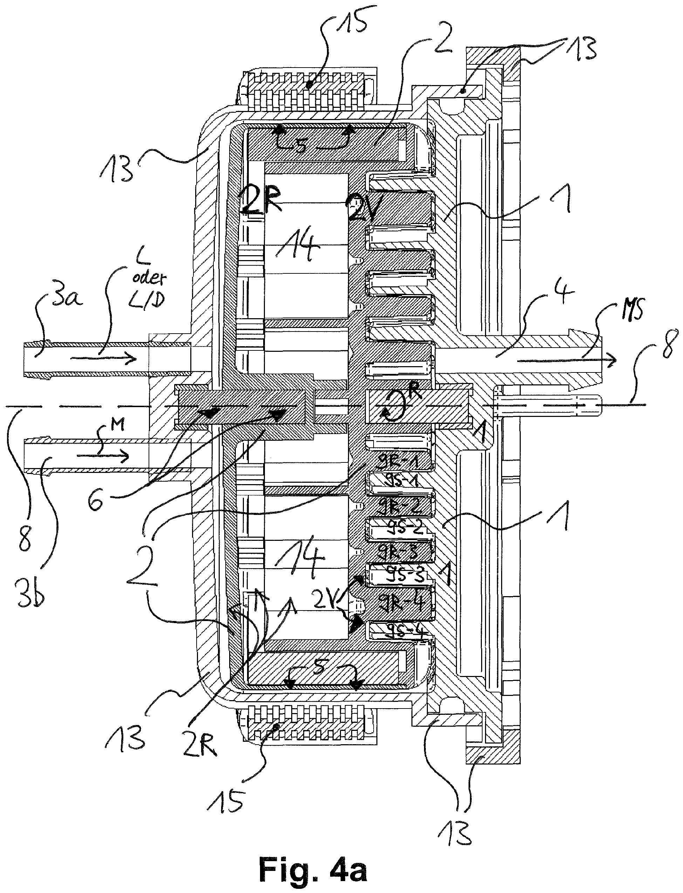

Figuren 4a (Schnitt in einer Ebene, in der die Rotationsachse 8 verläuft) und 4b (dreidimensionale Aufsicht auf den Stator 1, der zusammen mit dem Gehäuse 13 den hier nicht sichtbaren Rotor 2 umschließt) zeigen eine zweite erfindungsgemäße Milchaufschäumvorrichtung. Deren Aufbau folgt dabei grundsätzlich dem zur Aufschäumvorrichtungen der Figuren 1 bis 3b beschriebenen Aufbau (entsprechendes gilt für die Funktionsweise), so dass nachfolgend lediglich die Unterschiede beschrieben werden. Identische Bezugszeichen bezeichnen somit identische Bauelemente.

Wie in Figur 1 (Gehäuse 7) umschließt das Gehäuse 13 der dynamischen Mischeinheit nicht nur die Rückseite 2R des Rotors 2, sondern auch dessen Außenumfang 5. Der Stator 1 (der fest und fluiddicht mit dem den Rotor 2 umschließenden Gehäuse 13 verbunden ist) bildet hier eine der Vorderseite 2V des Rotors gegenüberliegende, die Scherelementreihe 9S tragende, im Wesentlichen scheibenförmige Platte. Das Gehäuse 13 und der Stator 1 umschließen den Rotor 2 fluiddicht (bis auf die Öffnungen der Kanäle 3, 4).

Auf der Rückseite 2R des Rotors 2 führen, radial vom Zentrum 6 des Rotors bzw. von der Rotationsachse 8 nach außen versetzt, insgesamt zwei einzelne Zuleitkanäle 3a, 3b (die parallel zur Rotationsachse 8 verlaufen) von außen über die Gehäusewandung des Gehäuses 13 zur Rückseite 2R des Rotors 2.

Der erste Zuleitkanal 3a dient der Zufuhr von Luft oder eines L/D-Gemisches, der zweite Zuleitkanal 3b dient der Zuleitung von Milch M ins Innere der dynamischen Mischeinheit. Auf der Vorderseite 2V des Rotors führt der einzelne Ableitkanal 4 ebenfalls vom Zentrum 6 leicht radial nach außen hin versetzt sowie parallel zur Rotationsachse durch den Statorkörper aus dem fluiddichten Verbund von Gehäuse 13 und Stator 1 nach außen (Abfuhr des erzeugten Milchschaums MS).

Der Antrieb des Rotors 2 bzw. dessen Rotation R erfolgt elektromagnetisch: Dazu sind an der Rückseite 2R des Rotors 2 in diesen mehrere Permanentmagnete 14 integriert. Entlang der Rotationsachse 8 gesehen auf Höhe der Permanentmagnete 14 ist außenumfangsseitig über das Gehäuse 13 eine Spule 15 gewickelt, die mit elektrischem Strom beaufschlagbar ist. Die Konstruktion sowie die Anordnung der Spule 15 und der Permanentmagnete 14 ist dergestalt, dass ein elektromotorischer Rotationsantrieb bewirkt wird.

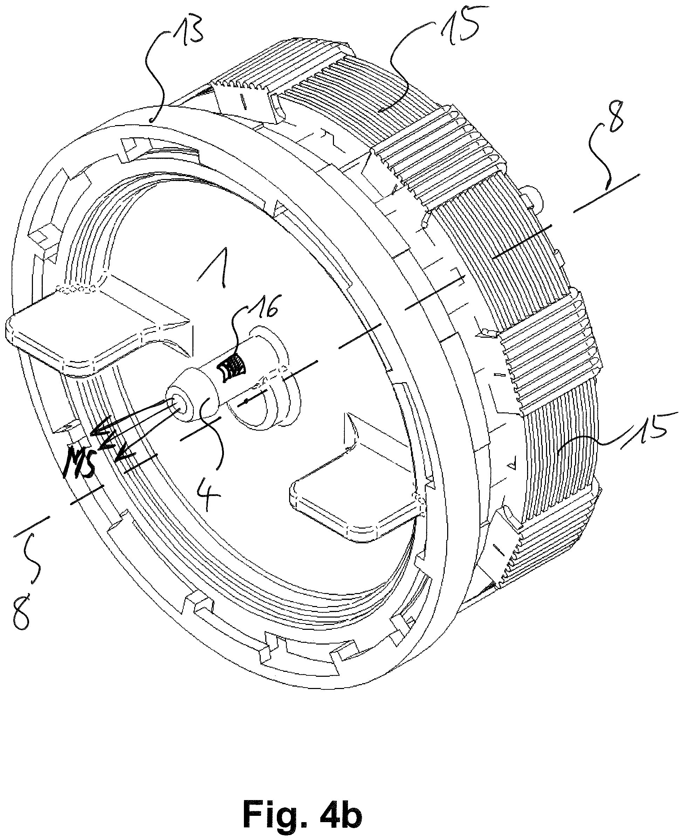

Die in den Figuren 4a und 4b gezeigte Variante hat den Vorteil, dass nach langer Betriebsdauer eventuell auftretende Dichtprobleme der motorbetriebenen Welle (vgl. Figur 1) vermieden werden können.

Wie Figur 4b erkennen lässt, ist am Ableitkanal 4 der dynamischen Mischeinheit ein Temperatursensor 16 positioniert, der mit einer Steuer- und Regeleinheit 17 der Milchaufschäumvorrichtung (vgl. Figur 5) in Verbindung steht.

Die in den Figuren 4a und 4b gezeigte Variante hat auch den Vorteil, dass über den ersten Zuleitkanal 3a Dampf D bei hoher Temperatur (bis zu 100°C) zur Desinfektion über den Strömungsweg L, bzw. L/D ins Innere des Rotor-Stator-Systems geleitet werden kann, wobei gleichzeitig ein Einströmen von Reinigungslösung über den zweiten Zuleitkanal 3b bewirkt werden kann. Ein gleichzeitiges Rotieren R des Rotors 2 ermöglicht somit eine optimale Reinigung: chemische Reinigung durch hohe Temperatur bei gleichzeitiger mechanischer Reinigung durch Rotation.

Figur 5 zeigt eine erfindungsgemäße, elektrisch betriebene Kaffeemaschine (Kaffeevollautomat) mit integrierter Milchaufschäumvorrichtung gemäß Figuren 1 bis 3 oder gemäß Figuren 4a und 4b. Vom Kaffeevollautomaten sind dabei nur die erfindungsgemäß wesentlichen Merkmale gezeigt.

Aus einem externen Behältnis 18 entnommene Milch M wird über eine Zuleitung von einer Pumpe 19 des Vollautomaten angesaugt. Stromabwärts der Pumpe 19 mündet eine Luft- bzw. Luft-Dampf-Zuleitung in den pumpenausgangsseitigen, zur dynamischen Mischeinheit 1, 2 hinführenden Fluidzufuhrpfad. Letzterer entspricht dem Zuleitkanal 3 in Figur 1. Wird die dynamische Mischeinheit 1, 2 der Figuren 4a, 4b verwendet (hier nicht gezeigt), so erfolgt keine stromaufwärtige Vereinigung des Luft- bzw. Luft-Dampf-Flusses mit dem Milch-Fluss, sondern die Luft L bzw. das L/D-Gemisch wird über den ersten Zuleitkanal 3a und die Milch M wird über den pumpenausgangsseitigen Pfad, der in den zweiten Zuleitkanal 3b mündet, in die dynamische Mischeinheit 1, 2 geleitet.

Die Luft- bzw. Luft-Dampf-Zuleitung erfolgt wie folgt: Zur Luftzufuhr umfasst der Kaffeevollautomat eine Druckluftquelle 21, über die die Luft L in die Leitung zwischen Pumpe 19 und dynamischer Mischeinheit 1, 2 eingeleitet werden kann. Stromaufwärts der entsprechenden Mündung mündet eine Dampfleitung in diese Luftzuleitung, an deren stromaufwärtigem Ende eine Heißdampfquelle 20 sitzt. Über die Dampfleitung kann der Druckluft L ein wählbarer Dampfanteil D zugesetzt werden (wodurch es in der Mischeinheit 1, 2 nicht nur zum Aufschäumen durch vielfache Scherung, sondern auch zum Erwärmen des auszugebenden Milchschaums MS kommt). Optional (oder alternativ zur Dampfquelle 20) kann auch eine Heizeinheit (hier nicht gezeigt) vorgesehen sein, mit der die dynamische Mischeinheit (vorzugsweise der Stator 1 derselben) beheizt werden kann.

Der Ableitkanal 4 der dynamischen Mischeinheit 1, 2 zur Ableitung des Milchschaums MS führt in einen Ausgabekopf 22 des Kaffeevollautomaten, der zum Ausgeben sowohl des Milchschaums MS als auch des aufgebrühten Kaffees K (Brüheinheit hier nicht gezeigt) in eine externe Tasse T ausgebildet ist. Am Ableitkanal 4 ist ein Temperatursensor 16 positioniert (vgl. Figur 4b).

Eine zentrale Steuer- und Regeleinheit 17 steuert Herstellung und Ausgabe des Milchschaums MS (sowie auch die übrigen Funktionen des Kaffeevollautomaten) wie folgt: Bidirektionale Steuer- und Datenleitungen 16a, 19a, 20a und 21a verbinden die zentrale Steuer- und Regeleinheit 17 mit dem Temperatursensor 16, der Pumpe 19, der Dampfquelle 20 und der Druckluftquelle 21. Zudem ist die Einheit 17 (hier nicht gezeigt) zur Regelung der Rotordrehzahl mit der dynamischen Mischeinheit 1, 2 verbunden.

Die Einheit 17 steuert zunächst das Verhältnis von Dampf D und L des L/D-Gemisches, das der Milch M zugesetzt wird. So kann beispielsweise, wenn über den Temperatursensor 16 erkannt wird, dass die Temperatur des Milchschaums MS zu gering ist, der Anteil an Dampf D relativ zum Anteil an Luft L im L/D-Gemisch erhöht werden. Die Menge an zugeführtem L/D-Gemisch relativ zur über die Pumpe 19 angesaugten Milchmenge M kann über die Pumpendrehzahl der Pumpe 19 geregelt werden: ein Erhöhen der Pumpendrehzahl erhöht die Fördermenge der Pumpe 19 und somit den Anteil von Milch M am Gemisch aus Luft L, Dampf D und Milch M. Auch ist ein vollständiges Abschalten der Dampfquelle 20 über die Leitung 20a möglich, so dass (nach Kühlung der Milch M im externen Behältnis 18) kalter Milchschaum MS hergestellt und ausgegeben 22 werden kann.

Alternativ zum in Figur 5 gezeigten Grundaufbau kann die Pumpe 19 auch nach der Einmündung der L/D-Leitung in die Zuleitung zur Mischeinheit 1, 2 positioniert werden. Anstelle des Erhitzens der Milch M über Dampf D kann die Dampfquelle 20 auch weggelassen werden: zwischen Pumpe 19 und Mischeinheit 1, 2 kann stattdessen ein Durchlauferhitzer positioniert werden.

## Patentansprüche

1. Milchaufschäumvorrichtung
mit einer dynamischen Mischeinheit aufweisend einen Stator (1) und einen relativ zum Stator (1) in Rotation (R) versetzbaren Rotor (2),
wobei Rotor (2) und Stator (1) so ausgebildet sind, dass Milch (M) und Luft, bzw. Luft-Dampf-Gemisch (L, L/D) zunächst der dynamischen Mischeinheit zuleitbar (3) sind, anschließend zum Aufschäumen in der dynamischen Mischeinheit durch Rotation (R) des Rotors (2) relativ zum Stator (1) mehrfach einer Scherwirkung unterwerfbar sind und schließlich aus der dynamischen Mischeinheit ableitbar (4) sind,
***dadurch gekennzeichnet,***
**dass** sowohl der Rotor (2) als auch der Stator (1) mehrere abwechselnd konzentrisch um die Rotationsachse angeordnete Scherelementreihen (9R, 9S) aufweist, und
**dass** Scherelementreihen (9R, 9S) des Rotors (2) und des Stators (1) intermittierend so ineinander greifen, dass die zwischen Rotor (2) und Stator (1) strömende, die Scherelementreihen (9R, 9S) des Rotors (2) und des Stators (1) abwechselnd durchströmende Milch (M) und die Luft, bzw. das Luft-Dampf-Gemisch (L, L/D) aufgrund der Rotation (R) des Rotors (2) relativ zum Stator (1) jeweils zwischen zwei unmittelbar benachbarten Scherelementreihen, also einer Scherelementreihe (9R) des Rotors (2) und einer Scherelementreihe (9S) des Stators (1), geschert und einem Richtungswechsel unterworfen werden.

2. Milchaufschäumvorrichtung nach dem vorhergehenden Anspruch
***dadurch gekennzeichnet, dass***
Rotor (2) und Stator (1) vom Zentrum (6) des Rotors (2) zum Außenumfang (5) des Rotors (2) hin gesehen, also von der Rotationsachse (8) radial nach außen gesehen jeweils die mehreren radial beabstandet voneinander ausgebildeten Scherelementreihen (9R, 9S) mit jeweils mehreren Scherelementen (10R, 10S) aufweisen, wobei Rotor (2) und Stator (1) relativ zueinander so positioniert sind, dass sich, entlang der Rotationsachse (8) gesehen, die Scherelemente (10R) des Rotors (2) einerseits und die Scherelemente (10S) des Stators (1) andererseits zumindest abschnittsweise überlappen und dass sich, von der Rotationsachse (8) radial nach außen gesehen, Scherelementreihen (9R, 9S) des Rotors (2) und des Stators (1) jeweils abwechseln.

3. Milchaufschäumvorrichtung nach dem vorhergehenden Anspruch
***dadurch gekennzeichnet, dass***
für eine Scherelementreihe (9R) des Rotors (2) und eine dazu radial unmittelbar benachbarte Scherelementreihe (9S) des Stators (1), bevorzugt für alle solche Paare (9R, 9S) radial unmittelbar benachbarter Scherelementreihen des Rotors (2) und des Stators (1), die zwischen den einzelnen Scherelementen (10R) der Scherelementreihe (9R) des Rotors (2) ausgebildeten Durchtrittsöffnungen (11R) für Milch (M) und Luft, bzw. Luft-Dampf-Gemisch (L, L/D) den zwischen den einzelnen Scherelementen (10S) der Scherelementreihe (9S) des Stators (1) ausgebildeten Durchtrittsöffnungen (11S) für Milch (M) und Luft, bzw. Luft-Dampf-Gemisch (L, L/D) gegenläufig gerichtet sind.

4. Milchaufschäumvorrichtung nach einem der vorhergehenden Ansprüche
***dadurch gekennzeichnet, dass***
Rotor (2) und Stator (1) so ausgebildet sind, dass Milch (M) und Luft, bzw. Luft-Dampf-Gemisch (L, L/D) zunächst der dynamischen Mischeinheit zuleitbar (3) sind, anschließend zum Aufschäumen in der dynamischen Mischeinheit vom Außenumfang (5) des Rotors (2) zum Zentrum (6) des Rotors (2) hin strömend durch Rotation (R) des Rotors (2) relativ zum Stator (1) mehrfach einer Scherwirkung unterwerfbar sind und schließlich aus der dynamischen Mischeinheit ableitbar (4) sind.

5. Milchaufschäumvorrichtung nach einem der vorhergehenden Ansprüche
***dadurch gekennzeichnet, dass***
der Rotor (2) außenumfangsseitig (5) vom Stator (1) und/oder von einem den Rotor (2) beherbergenden, relativ zum Stator ortsfesten Gehäuse (7, 13) umgeben ist und
dass die Milch (M) und die Luft, bzw. Luft-Dampf-Gemisch (L, L/D) auf die Rückseite (2R) des Rotor (2) leitbar sind, von dort (2R) über durch Rotation (R) des Rotors (2) bewirkte Fliehkräfte zum Außenumfang (5) des Rotors (1) hin lenkbar sind und von dort (5) vermittels des Stators (1) und/oder des Gehäuses (7, 13) sowie am Außenumfang (5) des Rotors (2) vorbeiströmend zur Vorderseite (2V) des Rotors (2) hin lenkbar sind, an der (2V) sie (M, L, L/D) vom Außenumfang (5) des Rotors (2) zum Zentrum (6) des Rotors (2) hin strömend durch die Rotation (R) des Rotors (2) der mehrfachen Scherwirkung unterwerfbar und schließlich aus der dynamischen Mischeinheit (1, 2) ableitbar (4) sind.

6. Milchaufschäumvorrichtung nach einem der vorhergehenden Ansprüche
***dadurch gekennzeichnet, dass***
die maximale radiale Ausdehnung des Rotors (2) und/oder des Stators (1) zwischen 2 cm und 15 cm, bevorzugt zwischen 4 cm und 8 cm, beträgt.

7. Milchaufschäumvorrichtung nach einem der vorhergehenden Ansprüche
***dadurch gekennzeichnet, dass***
der Rotor (2) mit einer Drehzahl zwischen 500 1/min und 7000 1/min, bevorzugt zwischen 2000 1/min und 4000 1/min, relativ zum Stator (1) rotierbar ist.

8. Milchaufschäumvorrichtung nach einem der vorhergehenden Ansprüche
***gekennzeichnet durch***
einen Antrieb des Rotors über eine motorbetriebene Welle (12).

9. Milchaufschäumvorrichtung nach einem der vorhergehenden Ansprüche
***dadurch gekennzeichnet, dass***
der Rotor (2) innerhalb eines Gehäuses (13) gekapselt ist, dass im oder am Rotor (2) ein oder mehrere Permanentmagnet(e) (14) befestigt ist/sind und dass im oder am Gehäuse (13) eine oder mehrere zum Antrieb des Rotors (2) mit elektrischem Strom beaufschlagbare Spule(n) (15) befestigt ist/sind.

10. Milchaufschäumvorrichtung nach einem der vorhergehenden Ansprüche
***gekennzeichnet durch***
einen oder mehrere zum Zuleiten von Milch (M) und Luft, bzw. Luft-Dampf-Gemisch (L, L/D) in die dynamische Mischeinheit ausgebildete(n) Zuleitkanal/Zuleitkanäle (3, 3a, 3b), der/die bevorzugt zumindest abschnittsweise parallel zur Rotationsachse (8) ausgerichtet ist/sind,
und/oder
einen zum Ableiten der aufgeschäumten Milch (MS) aus der dynamischen Mischeinheit ausgebildeten Ableitkanal (4), der bevorzugt zumindest abschnittsweise parallel zur Rotationsachse (8) ausgerichtet ist.

11. Milchaufschäumvorrichtung nach einem der vorhergehenden Ansprüche
***dadurch gekennzeichnet, dass***
die dynamische Mischeinheit, insbesondere der Stator (1) derselben, beheizbar ist.

12. Milchaufschäumvorrichtung nach einem der vorhergehenden Ansprüche, bevorzugt bei Rückbezug auf Anspruch 10,
***gekennzeichnet durch***
eine Steuereinheit, mit der eine oder mehrere der folgenden Kenngrößen der Milchaufschäumvorrichtung einstellbar ist/sind:
• Drehzahl des Rotors (2),
• der dynamischen Mischeinheit pro Zeiteinheit zugeleitete Milchmenge,
• der dynamischen Mischeinheit pro Zeiteinheit zugeleitete Luftmenge oder Luft-Dampf-Gemisch-Menge,
• Mischungsverhältnis von Luft und Dampf eines der dynamischen Mischeinheit zugeleiteten Luft-Dampf-Gemisches,
und/oder
• Temperatur des Dampfes in einem der dynamischen Mischeinheit zugeleiteten Luft-Dampf-Gemisch.

13. Milchaufschäumvorrichtung nach dem vorhergehenden Anspruch
***gekennzeichnet durch***
einen Temperatursensor (16), der bevorzugt im oder am Ableitkanal (4) vorgesehen ist, mit dem die Temperatur der aus der dynamischen Mischeinheit abgeleiteten, aufgeschäumten Milch (MS) erfassbar ist, und
**dadurch**, dass die Steuereinheit eine Steuer- und Regeleinheit (17) ist, mit der unter Heranziehen der mit dem Temperatursensor (16) erfassten Temperatur der aufgeschäumten Milch (MS) eine oder mehrere der folgenden Kenngrößen der Milchaufschäumvorrichtung regelbar ist/sind:
• Drehzahl des Rotors (2),
• der dynamischen Mischeinheit pro Zeiteinheit zugeleitete Milchmenge,
• der dynamischen Mischeinheit pro Zeiteinheit zugeleitete Luftmenge oder Luft-Dampf-Gemisch-Menge,
• Mischungsverhältnis von Luft und Dampf eines der dynamischen Mischeinheit zugeleiteten Luft-Dampf-Gemisches,
und/oder
• Temperatur des Dampfes in einem der dynamischen Mischeinheit zugeleiteten Luft-Dampf-Gemisch.

14. Getränkebereiter insbesondere zum Zubereiten von Heißgetränken, bevorzugt elektrisch betriebene Kaffeemaschine, mit einer Milchaufschäumvorrichtung nach einem der vorhergehenden Ansprüche.

## Claims

1. Milk-frothing device,
comprising a dynamic mixing unit having a stator (1) and a rotor (2) which can be set in rotation (R) relative to the stator (1),
wherein the rotor (2) and the stator (1) are configured such that milk (M) and air or an air/steam mixture (L, L/D) can first be fed (3) to the dynamic mixing unit, then for frothing purposes can be subjected multiple times to a shearing effect in the dynamic mixing unit by rotation (R) of the rotor (2) relative to the stator (1), and finally can be discharged (4) from the dynamic mixing unit,
**characterized**
**in that** both the rotor (2) and the stator (1) has multiple shearing element rows (9R, 9S) arranged concentrically around the axis of rotation in an alternating manner, and
**in that** shearing element rows (9R, 9S) of the rotor (2) and of the stator (1) intermittently engage in one another such that the milk (M) flowing between the rotor (2) and the stator (1), which flows alternately through the shearing element rows (9R, 9S) of the rotor (2) and of the stator (1), and the air or the air/steam mixture (L, L/D) are sheared in each case between two immediately adjacent shearing element rows, that is to say one shearing element row (9R) of the rotor (2) and one shearing element row (9S) of the stator (1), due to the rotation (R) of the rotor (2) relative to the stator (1), and are subjected to a change in direction.

2. Milk-frothing device according to the preceding claim,
**characterized in that**
the rotor (2) and the stator (1), as seen from the centre (6) of the rotor (2) towards the outer circumference (5) of the rotor (2), that is to say as seen radially outwards from the axis of rotation (8), each have the plurality of radially spaced-apart shearing element rows (9R, 9S) comprising in each case a plurality of shearing elements (10R, 10S), wherein the rotor (2) and the stator (1) are positioned relative to one another such that, as seen along the axis of rotation (8), the shearing elements (10R) of the rotor (2) on the one hand and the shearing elements (10S) of the stator (1) on the other hand overlap one another at least in some sections, and such that, as seen radially outwards from the axis of rotation (8), shearing element rows (9R, 9S) of the rotor (2) and of the stator (1) respectively alternate.

3. Milk-frothing device according to the preceding claim,
**characterized in that**
for one shearing element row (9R) of the rotor (2) and one radially immediately adjacent shearing element row (9S) of the stator (1), preferably for all such pairs (9R, 9S) of radially immediately adjacent shearing element rows of the rotor (2) and of the stator (1), the through-openings (11R) for milk (M) and air or an air/steam mixture (L, L/D) which are formed between the individual shearing elements (10R) of the shearing element row (9R) of the rotor (2) are directed in opposite directions to the through-openings (11S) for milk (M) and air or an air/steam mixture (L, L/D) which are formed between the individual shearing elements (10S) of the shearing element row (9S) of the stator (1) .

4. Milk-frothing device according to one of the preceding claims,
**characterized in that**
the rotor (2) and the stator (1) are configured such that milk (M) and air or an air/steam mixture (L, L/D) can first be fed (3) to the dynamic mixing unit, then for frothing purposes can be subjected multiple times to a shearing effect in the dynamic mixing unit by rotation (R) of the rotor (2) relative to the stator (1) when flowing from the outer circumference (5) of the rotor (2) towards the centre (6) of the rotor (2), and finally can be discharged (4) from the dynamic mixing unit.

5. Milk-frothing device according to one of the preceding claims,
**characterized in that**
the rotor (2) is surrounded on the outer circumference side (5) by the stator (1) and/or by a housing (7, 13) which accommodates the rotor (2) and which is stationary relative to the stator, and
**in that** the milk (M) and the air or the air/steam mixture (L, L/D) can be conducted onto the rear side (2R) of the rotor (2), can be directed from there (2R) towards the outer circumference (5) of the rotor (1) via centrifugal forces brought about by rotation (R) of the rotor (2), and can be directed from there (5) by means of the stator (1) and/or the housing (7, 13) towards the front side (2V) of the rotor (2), thereby flowing past the outer circumference (5) of the rotor (2), at which front side (2V) they (M, L, L/D) can be subjected to the multiple shearing effect by the rotation (R) of the rotor (2) when flowing from the outer circumference (5) of the rotor (2) to the centre (6) of the rotor (2), and finally can be discharged (4) from the dynamic mixing unit (1, 2) .

6. Milk-frothing device according to one of the preceding claims,
**characterized in that**
the maximum radial extension of the rotor (2) and/or of the stator (1) is between 2 cm and 15 cm, preferably between 4 cm and 8 cm.

7. Milk-frothing device according to one of the preceding claims,
**characterized in that**
the rotor (2) is rotatable relative to the stator (1) at a rotational speed of between 500 1/min and 7000 1/min, preferably between 2000 1/min and 4000 1/min.

8. Milk-frothing device according to one of the preceding claims,
**characterized by**
a drive of the rotor via a motor-driven shaft (12).

9. Milk-frothing device according to one of the preceding claims,
**characterized in that**
the rotor (2) is encapsulated within a housing (13), **in that** one or more permanent magnet (s) (14) is/are fastened in or on the rotor (2), and **in that** one or more coil(s) (15) which can be supplied with electrical current for driving the rotor (2) is/are fastened in or on the housing (13).

10. Milk-frothing device according to one or more of the preceding claims,
**characterized by**
one or more feed channel (s) (3, 3a, 3b) which is/are configured for feeding milk (M) and air or an air/steam mixture (L, L/D) into the dynamic mixing unit and which is/are preferably oriented parallel to the axis of rotation (8) at least in some sections,
and/or
a discharge channel (4) which is configured for discharging the frothed milk (MS) from the dynamic mixing unit and which is preferably oriented parallel to the axis of rotation (8) at least in some sections.

11. Milk-frothing device according to one of the preceding claims,
**characterized in that**
the dynamic mixing unit, in particular the stator (1) thereof, can be heated.

12. Milk-frothing device according to one of the preceding claims, preferably referring back to claim 10,
**characterized by**
a control unit, by which one or more of the following characteristic parameters of the milk-frothing device can be set:
• rotational speed of the rotor (2),
• quantity of milk fed to the dynamic mixing unit per unit of time,
• quantity of air or quantity of air/steam mixture fed to the dynamic mixing unit per unit of time,
• mixing ratio of air and steam in an air/steam mixture fed to the dynamic mixing unit,
and/or
• temperature of the steam in an air/steam mixture fed to the dynamic mixing unit.

13. Milk-frothing device according to the preceding claim,
**characterized by**
a temperature sensor (16) which is preferably provided in or on the discharge channel (4) and by which the temperature of the frothed milk (MS) discharged from the dynamic mixing unit can be detected, and
**characterized in that** the control unit is a control and regulation unit (17), by which, using the temperature of the frothed milk (MS) detected by the temperature sensor (16), one or more of the following characteristic parameters of the milk-frothing device can be regulated:
• rotational speed of the rotor (2),
• quantity of milk fed to the dynamic mixing unit per unit of time,
• quantity of air or quantity of air/steam mixture fed to the dynamic mixing unit per unit of time,
• mixing ratio of air and steam in an air/steam mixture fed to the dynamic mixing unit,
and/or
• temperature of the steam in an air/steam mixture fed to the dynamic mixing unit.

14. Beverage maker, in particular for preparing hot beverages, preferably an electrically operated coffee machine, comprising a milk-frothing device according to one of the preceding claims.

## Revendications

1. Dispositif de moussage de lait, avec une unité de mélange dynamique comprenant un stator (1) et un rotor (2) pouvant être mis en rotation (R) par rapport au stator (1), le rotor (2) et le stator (1) étant conçus de façon à ce que le lait (M) et de l'air ou un mélange air-vapeur (L, L/D) puissent d'abord être introduits (3) dans l'unité de mélange dynamique, puis être ensuite soumis, pour le moussage dans l'unité de mélange dynamique par rotation (R) du rotor (2) par rapport au stator (1), plusieurs fois à une action de cisaillement et enfin être évacués (4) hors de l'unité de mélange dynamique,
**caractérisé en ce que**
aussi bien le rotor (2) que le stator (1) comprend plusieurs rangées d'éléments de cisaillement (9R, 9S) disposés en alternance de manière concentrique autour de l'axe de rotation et **en ce que** les rangées d'éléments de cisaillement (9R, 9S) du rotor (2) et du stator (1) s'emboîtent entre elles par intermittence de façon à ce que le lait (M) et l'air ou le mélange air-vapeur (L, L/D) s'écoulant entre le rotor (2) et le stator (1), traversant en alternance les rangées d'éléments de cisaillement (9R, 9S) du rotor (2) et du stator (1), soient cisaillés du fait de la rotation (R) du rotor (2) par rapport au stator (1) entre deux rangées d'éléments de cisaillement immédiatement adjacentes, donc une rangée d'éléments de cisaillement (9R) du rotor (2) et une rangée d'éléments de cisaillement (9S) du stator (1) et soumis à un changement de sens.

2. Dispositif de moussage de lait selon la revendication précédente, **caractérisé en ce que** le rotor (2) et le stator (1) comprennent, vu du centre (6) du rotor (2) vers la circonférence externe (5) du rotor (2), donc de l'axe de rotation (8) radialement vers l'extérieur, chacun les plusieurs rangées d'éléments de cisaillement (9R, 9S) disposées de manière distante radialement entre elles, avec chacune plusieurs éléments de cisaillement (10R, 10S), le rotor (2) et le stator (1) étant positionnés l'un par rapport à l'autre de façon à ce que, vu dans le long de l'axe de rotation (8), les éléments de cisaillement (10R) du rotor (2) d'une part et les éléments de cisaillement (10S) du stator (1) d'autre part se superposent au moins partiellement et **en ce que**, vu de l'axe de rotation (8) radialement vers l'extérieur, les rangées d'éléments de cisaillement (9R, 9S) du rotor (2) et du stator (1) alternent.

3. Dispositif de moussage de lait selon la revendication précédente, **caractérisé en ce que**, pour une rangée d'éléments de cisaillement (9R) du rotor (2) et une rangée d'éléments de cisaillement (9S) du stator (1), immédiatement adjacente radialement à celle-ci, de préférence pour toutes les paires (9R, 9S) de rangées d'éléments de cisaillement, immédiatement adjacentes, du rotor (2) et du stator (1), les ouvertures de passage (11R) pour le lait (M) et l'air ou le mélange air-vapeur (L, L/D), réalisées entre les différents éléments de cisaillement (10R) de la rangée d'éléments de cisaillement (9R) du rotor (2), sont orientées dans le sens inverse des ouvertures de passage (11S) pour le lait (M) et l'air ou le mélange air-vapeur (L, L/D), réalisées entre les différents éléments de cisaillement (10S) de la rangée d'éléments de cisaillement (9S) du stator (1).

4. Dispositif de moussage de lait selon l'une des revendications précédentes, **caractérisé en ce que** le rotor (2) et le stator (1) sont conçus de façon à ce que le lait (M) et l'air ou le mélange air-vapeur (L, L/D) puissent d'abord être introduits (3) dans l'unité de mélange dynamique, puis être ensuite soumis, pour le moussage dans l'unité de mélange dynamique, en s'écoulant de la circonférence externe (5) du rotor (2) vers le centre (6) du rotor (2), par rotation (R) du rotor (2) par rapport au stator (1), plusieurs fois à une action de cisaillement et enfin être évacués (4) hors de l'unité de mélange dynamique.

5. Dispositif de moussage de lait selon l'une des revendications précédentes, **caractérisé en ce que** le rotor (2) est entouré, sur sa circonférence externe (5) par le stator (1) et/ou par un carter (7, 13) fixe par rapport au stator, logeant le rotor (2) et
**en ce que** le lait (M) et l'air ou le mélange air-vapeur (L, L/D) peuvent être conduits vers l'arrière (2R) du rotor (2), de là (2R) ils peuvent être déviés, du fait des forces centrifuges dues à la rotation (R) du rotor (2), vers la circonférence externe (5) du rotor (1) et de là (5) ils peuvent être déviés, au moyen du stator (1) et/ou du carter (7, 13) ainsi que, en s'écoulant le long de la circonférence externe (5) du rotor (2), vers l'avant (2V) du rotor (2), au niveau duquel (2V) ils (M, L, L/D) peuvent être soumis, en s'écoulant de la circonférence externe (5) du rotor (2) vers le centre (6) du rotor (2), par la rotation (R) du rotor (2), à la multiple action de cisaillement puis finalement peuvent être évacués (4) hors de l'unité de mélange dynamique (1, 2).

6. Dispositif de moussage de lait selon l'une des revendications précédentes, **caractérisé en ce que** l'extension radiale maximale du rotor (2) et/ou du stator (1) est entre 2 cm et 15 cm, de préférence entre 4 cm et 8 cm.

7. Dispositif de moussage de lait selon l'une des revendications précédentes, **caractérisé en ce que** le rotor (2) peut tourner par rapport au stator (1) avec une vitesse de rotation entre 500 tr/min et 7000 tr/min, de préférence entre 2000 tr/min et 4000 tr/min.

8. Dispositif de moussage de lait selon l'une des revendications précédentes, **caractérisé par** un entraînement du rotor par l'intermédiaire d'un arbre entraîné par un moteur (12).

9. Dispositif de moussage de lait selon l'une des revendications précédentes, **caractérisé en ce que** le rotor (2) est encapsulé à l'intérieur d'un carter (13), **en ce que** dans ou sur le rotor (2) est/sont fixé(s) un ou plusieurs aimant(s) permanent(s) (14) et **en ce que** dans ou sur le carter (13) est/sont fixée(s) une ou plusieurs bobine(s) (15) pouvant être alimentée(s) en courant électrique pour l'entraînement du rotor (2).

10. Dispositif de moussage de lait selon l'une des revendications précédentes, **caractérisé par** un ou plusieurs canal/canaux d'alimentation (3, 3a, 3b) conçu(s) pour l'introduction de lait (M) et d'air ou d'un mélange air-vapeur (L, L/D) dans l'unité de mélange dynamique, qui est/sont orienté(s) au moins partiellement parallèlement à l'axe de rotation (8) et/ou un canal d'évacuation (4) conçu pour l'évacuation du lait moussé (MS) hors de l'unité de mélange dynamique, qui est orienté au moins partiellement parallèlement à l'axe de rotation (8).

11. Dispositif de moussage de lait selon l'une des revendications précédentes, **caractérisé en ce que** l'unité de mélange dynamique, plus particulièrement le stator (1) de celle-ci, peut être chauffé.

12. Dispositif de moussage de lait selon l'une des revendications précédentes, de préférence en référence à la revendication 10,
**caractérisé par**
une unité de commande, avec laquelle une ou plusieurs des grandeurs caractéristiques suivantes du dispositif de moussage de lait peut/peuvent être réglée(s) :
• vitesse de rotation du rotor (2),
• quantité de lait introduite dans l'unité de mélange dynamique par unité de temps,
• quantité d'air ou de mélange air-vapeur introduite dans l'unité de mélange dynamique par unité de temps,
• rapport de mélange entre l'air et la vapeur d'un mélange air-vapeur introduit dans l'unité de mélange dynamique,
et/ou
• température de la vapeur dans un mélange air-vapeur introduit dans l'unité de mélange dynamique.

13. Dispositif de moussage de lait selon la revendication précédente, **caractérisé par** un capteur de température (16), disposé de préférence dans ou sur le canal d'évacuation (4), avec lequel la température du lait moussé (MS) évacué hors de l'unité de mélange dynamique peut être mesurée et
en ce que l'unité de commande est une unité de commande et de régulation (17) avec laquelle, à l'aide de la température du lait moussé (MS), mesurée par le capteur de température (16), une ou plusieurs des grandeurs caractéristiques suivantes du dispositif de moussage de lait peut/peuvent être régulée(s) :
• vitesse de rotation du rotor (2),
• quantité de lait introduite dans l'unité de mélange dynamique par unité de temps,
• quantité d'air ou de mélange air-vapeur introduite dans l'unité de mélange dynamique par unité de temps,
• rapport de mélange entre l'air et la vapeur d'un mélange air-vapeur introduit dans l'unité de mélange dynamique,
et/ou
• température de la vapeur dans un mélange air-vapeur introduit dans l'unité de mélange dynamique.

14. Appareil de préparation de boissons, plus particulièrement pour la préparation de boissons chaudes, de préférence machine à café électrique, avec un dispositif de moussage de lait selon l'une des revendications précédentes.
